# EUROPÄISCHE PATENTSCHRIFT

(11) **EP 1 290 073 B1**
(45) Veröffentlichungstag und Bekanntmachung des Hinweises auf die Patenterteilung: **30.03.2005**
(21) Anmeldenummer: 01947181.2
(22) Anmeldetag: 25.05.2001
(51) Int. Cl.: C08J 9/00, C08J 9/35

(54) **VERFAHREN ZUR HERSTELLUNG GESCHÄUMTER BAUTEILE VERMISCHT MIT PFLANZLICHEM TRÄGERMATERIAL**
METHOD FOR PRODUCING FOAMED STRUCTURAL PARTS THAT ARE MIXED WITH VEGETABLE CARRIER MATERIALS
PROCEDE DE PRODUCTION DE COMPOSANTS MOUSSES MELANGES AVEC UN MATERIAU SUPPORT VEGETAL

(30) Priorität: 30.05.2000 DE 10026757
(43) Veröffentlichungstag der Anmeldung: 12.03.2003
(73) Patentinhaber: Möller Plast GmbH, 33649 Bielefeld (DE)
(72) Erfinder: BECKMANN, Friedhelm, 32120 Hiddenhausen (DE)
(74) Vertreter: Schirmer, Siegfried, Dipl.-Ing.
(86) Internationale Anmeldenummer: PCT/DE2001/001999
(87) Internationale Veröffentlichungsnummer: WO 2001/092385

(56) Entgegenhaltungen:
- EP-A- 1 086 988
- WO-A-99/51425
- DE-A- 4 317 185
- US-A- 5 916 503
- PATENT ABSTRACTS OF JAPAN vol. 017, no. 216 (C-1053), 28. April 1993 (1993-04-28) & JP 04 356538 A (SEKISUI PLASTICS CO LTD), 10. Dezember 1992 (1992-12-10)

## Beschreibung

Die Erfindung betrifft ein Verfahren zur Herstellung geschäumter Bauteile, bei dem in ein plastifiziertes, aufzuschäumendes Grundmaterial ein flüssiges physikalisches Treibmittel enthaltendes, partikelförmiges, pflanzliches Trägermaterial eingemischt wird, wobei Temperatur und Druck des Grundmaterials so eingestellt sind, daß die Flüssigkeit nicht verdampft, und anschließend der Druck des Grundmaterials abgesenkt und/oder Temperatur des Grundmaterials erhöht wird, so daß die Flüssigkeit wenigstens teilweise verdampft und das Grundmaterial aufgeschäumt wird.

Bei der Herstellung von geschäumten Bauteilen, insbesondere im Automobilbereich, besteht die Forderung nach möglichst geringem Gewicht, ohne jedoch die mechanischen Grundeigenschaften wesentlich zu beeinträchtigen. Daher werden Kunststoffen zur Herstellung geschäumter Bauteile chemische oder physikalische Treibmittel bzw. Kombinationen davon in unterschiedlichen Gewichtsanteilen zugemischt.

Chemische Treibmittel weisen den Vorteil auf, daß sie durch Mischung unterschiedlicher Treibmittelsubstanzen zu einer großen Variationsbreite der Reaktionstemperatur führen, so daß die Verarbeitung auf entsprechend ausgelegten Produktionsmaschinen relativ einfach ist. Ein Nachteil derartiger Treibmittel besteht jedoch darin, daß nach der Reaktion Restsubstanzen im Grundwerkstoff bzw. Trägerwerkstoff verbleiben und somit dessen Eigenschaften beeinflussen und zu einer Verschlechterung der Oberfläche in Form von Schlieren führen.

Physikalische Treibmittel führen in der Regel zu feineren Schaumstrukturen, wobei allerdings ein homogenes Einbringen physikalischer Treibmittel in eine Kunststoffschmelze wesentlich schwieriger ist als im Fall chemischer Treibmittel. Aufgrund der feineren Schaumstruktur werden die mechanischen Eigenschaften eines herzustellenden Bauteils weniger beeinflußt, als dieses bei chemischen Treibmitteln der Fall ist.

Es ist bekannt, als physikalisches Treibmittel neben Edelgasen eine Flüssigkeit wie Wasser zu verwenden, die beispielsweise gemäß der US-3940467 in einem Extruder zugeführt wird, wobei das Material anschließend in eine Werkzeugkavität eingebracht und aufgeschäumt wird.

Aus der US-5607983 ist die Herstellung geschäumten thermoplastischen Gummis bekannt, wobei dem plastifizierten Material Wasser zugeführt wird, Wasser und Schmelze homogenisiert werden und anschließend die plastifizierte Masse zu einem geschäumten Profil geformt wird. Ferner werden der extrudierten Masse Pflanzenfasem und Pflanzenfaserpulver zugeführt, allerdings unabhängig von der Vermischung mit Wasser bzw. wasserhaltigem Gelmaterial.

Da sich gezeigt hat, daß eine homogene Vermischung von Wasser mit einem plastifizierten, aufzuschäumendem Grundmaterial außerordentlich schwierig ist, wurde versucht, Wasser mit Hilfe von wasserabsorbierenden Trägermaterialien in eine Schmelze einzubringen, beispielsweise gemäß der US-4649164. Die dort beschriebenen Zuschlagstoffe führen allerdings zu Rückständen im Polymer, die dessen Grundeigenschaften negativ beeinflussen.

Aus WO 95/04104 und DE 44 24 946 A1 ist es bekannt, einem als Grundmaterial dienenden biologisch abbaubaren Polymer (Stärke) ein biologisch abbaubares faserartiges Material zuzumischen, welches die Fähigkeit besitzt, Wasser kapillaraktiv zu binden. Durch dieses Wasser wird durch Einwirkung von Druck und Temperatur ein Aufschäumen des Polymers bewirkt.

Aus der JP 04-356538 A kann entnommen werden, daß ein Trägermaterial aus Naturzellulosematerial zugesetzt wird, das typischerweise 7 % normalgebundenes Wasser enthält.

Nach der JP 06-182847 A wird unter Ausnutzung des in einer Mischung aus Sägespänen, Reishüllen oder aktiver Holzkohle und Calciumkarbonat enthaltenen Wassers ein synthetisches Material, z. B. Polypropylen, aufgeschäumt. Aufgrund des natürlichen Wassergehaltes von ca. 7 % kann durch Variationen der Zugabemenge des Zellulosematerials die Gesamtfeuchtigkeitsmenge in der Mischung variiert werden. Eine Erhöhung des Zelluloseanteils wirkt sich negativ auf die mechanischen Eigenschaften des Grundwerkstoffs aus.

In der US-A-5 916 503 ist ein Verfahren zum Herstellen eines Materials beschrieben, das aufgrund von in einem Ausgangsmaterial enthaltener Feuchtigkeit nach einem Extrusionsvorgang zur Expansion gebracht wird.

Die DE 43 17 185 A offenbart ausschließlich die Verwendung von Fasern sowie eines chemischen Treibmittels.

Die WO 99 51425 A betrifft ein geschäumtes Polymer-Baumaterial, das Zellulosefasern, z. B. Holzfasern, enthält. Als Treibmittel wird bevorzugt ein chemisches Treibmittel oder ein in eine geschmolzene Mischung von Harz und Holzfasern eingeleitetes gasförmiges Medium genannt. Da Fasern aus Hartholz aufgrund ihres geringen Feuchtigkeitsgehaltes bevorzugt werden, läßt sich folgern, daß an einer Ausnutzung des Feuchtigkeitsgehalts als physikalisches Treibmittel nicht gedacht ist.

Aus der nachveröffentlichten EP-A-1 086 988 ist zu entnehmen, daß ein etwaiger Wassergehalt in einer extrudierbarer Pulvermischung entfernt wird, bevor ein geschäumtes Material hergestellt wird. Bevorzugt werden chemische Treibmittel verwendet.

Die Aufgabe der Erfindung besteht darin, ein Verfahren aufzuzeigen, mit dem es einerseits möglich ist, Wasser homogen in eine Schmelze einzubringen, ohne daß andererseits Rückstände in dem geschäumten Material verbleiben, die dessen Eigenschaften negativ beeinflussen. Außerdem sollte der apparative Aufwand möglichst gering gehalten werden.

Diese Aufgabe wird erfindungsgemäß durch ein Verfahren zum Herstellen geschäumter Bauteile gelöst, bei dem in ein plastifiziertes, aufzuschäumendes synthetisches Grundmaterial, ausgewählt aus der Gruppe Ethylen-Vinylacetat (EVA), Polypropylen oder Mischungen hieraus, ein flüssiges physikalisches Treibmittel enthaltendes, partikelförmiges, pflanzliches Trägermaterial aus Schäben eingemischt wird, wobei Temperatur und Druck des Grundmaterials so eingestellt sind, daß die Flüssigkeit nicht verdampft, und anschließend der Druck des Grundmaterials abgesenkt und/oder die Temperatur des Grundmaterials erhöht wird, so daß die Flüssigkeit wenigstens teilweise verdampft und das Grundmaterial aufgeschäumt wird, wobei durch Einstellen des Wassergehaltes des Trägermaterials die Feuchtigkeitszugabe gesteuert wird.

Vorzugsweise ist die Flüssigkeit Wasser, Alkohol oder eine Mischung daraus, wobei allerdings auch andere flüssige Medien denkbar sind, die zur Bildung eines Schaumes führen.

Bei Schäben handelt es sich um bei der Verarbeitung von Pflanzenfasern anfallende holzartige Bestandteile, die die Pflanzenfasern umgeben und Wasser bis zu 500 % ihres eigenen Gewichts aufnehmen können. Die Schäben können durch einen vorgeschalteten Vorbehandlungsschnitt in ihrem Feinheitsgrad eingestellt werden, wobei der Feinheitsgrad vorteilhafterweise zwischen pulvrig und maximal 15 bis 20 mm Länge eingestellt wird. Die feinkörnigen Bestandteile der Schäben dienen in der Kunststoffschmelze als Kristallisationsbeschleuniger (Keimbildner für Kristalle) und verbessern somit die Werkstoffeigenschaften.

In Ausgestaltung des Verfahren kann vorgesehen sein, daß das Grundmaterial vernetzt oder unvemetzt ist und unmittelbar vor Einbringung in eine Werkzeugkavität, bzw. bei einem Extruder im Düsenbereich, auf eine Temperatur gebracht wird, bei der die Flüssigkeit zu verdampfen beginnt.

In weiterer Ausgestaltung kann vorgesehen sein, daß das flüssigkeitshaltige Trägermaterial in ein erstes, plastifiziertes Grundmaterial eingemischt wird, wobei Temperatur und Druck des ersten Grundmaterials so eingestellt sind, daß die Flüssigkeit nicht verdampft, und wobei unmittelbar vor Einbringung in eine Werkzeugkavität, bzw. bei einem Extruder im Düsenbereich, ein mit dem ersten Grundmaterial verträgliches zweites Grundmaterial eingemischt wird, dessen Temperatur so hoch ist, daß sich eine Mischtemperatur einstellt, die zu einer wenigstens teilweisen Verdampfung der Flüssigkeit führt.

Die beiden plastifizierten Grundmaterialien bzw. Schmelzen werden unmittelbar vor der Mündung einer Werkzeugkavität bzw. kurz vor der Düsenöffnung der Verarbeitungsmaschine zusammengeführt und über eine entsprechende Vorrichtung miteinander vermischt bzw. homogenisiert. Dabei ist es günstig, die Vermischung so schnell wie möglich bzw. die Aufheizzeit so kurz wie möglich zu halten, um zu vermeiden, daß die als Schäummittel dienende Flüssigkeit zu schnell aus der homogenisierten Schmelze entweichen kann und somit der Schäumeffekt beeinträchtigt wird.

Es kann vorgesehen sein, daß das erste Grundmaterial Ethylen-Vinylacetat (EVA) mit einer Schmelztemperatur zwischen 85° C und 120° C oder ein Metallocen-PP mit einer Schmelztemperatur zwischen 130° C und 160° C ist. Das zweite Grundmaterial kann ein verstärktes oder unverstärktes Polypropylen mit einem Schmelzpunkt zwischen 190° C und 220° C sein.

Die Verfahrensführung ist vorzugsweise so, daß die Flüssigkeit im wesentlichen erst dann vollständig verdampft ist, wenn das Grundmaterial in eine Werkzeugkavität eingespritzt worden ist bzw. bei einem Extruder aus der Düse ausgetreten ist.

In weiterer Ausgestaltung der Erfindung kann vorgesehen sein, die Verdampfung der Flüssigkeit durch Energiezufuhr, insbesondere Mikrowellen- oder Hochfrequenzenergie, auszulösen bzw. zu unterstützen. Besonders günstige Auswirkungen im Hinblick auf eine feine, homogene Schaumstruktur können erzielt werden, indem die Absenkung des Drucks des Grundmaterials und/oder die Erhöhung der Temperatur des Grundmaterials innerhalb einer möglichst kurzen Zeit erfolgt.

## Patentansprüche

1. Verfahren zum Herstellen geschäumter Bauteile, bei dem in ein plastifiziertes, aufzuschäumendes Grundmaterial ein flüssiges physikalisches Treibmittel enthaltendes, partikelförmiges, pflanzliches Trägermaterial eingemischt wird, wobei Temperatur und Druck des Grundmaterials so eingestellt sind, daß das flüssige physikalische Treibmittel nicht verdampft, und anschließend der Druck des Grundmaterials abgesenkt und/oder die Temperatur des Grundmaterials erhöht wird, so daß das flüssige physikalische Treibmittel wenigstens teilweise verdampft und das Grundmaterial aufgeschäumt wird, **dadurch gekennzeichnet, daß** das Trägermaterial zumindest teilweise aus Schäben besteht.

2. Verfahren nach Anspruch 1, **dadurch gekennzeichnet, daß** das flüssige physikalische Treibmittel Wasser, Alkohol oder eine Mischung daraus ist.

3. Verfahren nach Anspruch 1 oder 2, **dadurch gekennzeichnet, daß** das Trägermaterial teilweise aus Pflanzenfaser besteht.

4. Verfahren nach einem der vorangehenden Ansprüche, **dadurch gekennzeichnet, daß** das Trägermaterial zumindest teilweise aus Bastfasern und/oder Schäben von Bastfaserpflanzen und/oder Schäben mit noch nicht vollständig gelösten Bastfasern besteht.

5. Verfahren nach einem der vorangehenden Ansprüche, **dadurch gekennzeichnet, daß** das Trägermaterial zumindest teilweise pulverförmig ist.

6. Verfahren nach einem der vorangehenden Ansprüche, **dadurch gekennzeichnet, daß** das Grundmaterial vernetzt oder unvernetzt ist.

7. Verfahren nach einem der vorangehenden Ansprüche, **dadurch gekennzeichnet, daß** das Grundmaterial unmittelbar vor Einbringung in eine Werlkzeugkavität, bzw. bei einem Extruder im Düsenbereich, auf eine Temperatur gebracht wird, bei der das flüssige physikalische Treibmittel zu verdampfen beginnt.

8. Verfahren nach einem der vorangehenden Ansprüche, **dadurch gekennzeichnet, daß** das Trägermaterial in ein erstes plastifiziertes Grundmaterial eingemischt wird, wobei Temperatur und Druck des ersten Grundmaterials so eingestellt sind, daß das flüssige physikalische Treibmittel nicht verdampft, und unmittelbar vor Einbringung in eine Werkzeugkavität, bzw. bei einem Extruder im Düsenbereich, ein mit dem ersten Grundmaterial verträgliches zweites plastifiziertes Grundmaterial eingemischt wird, dessen Temperatur so hoch ist, daß sich eine Mischtemperatur einstellt, die zu einer wenigstens teilweisen Verdampfung des flüssigen physikalischen Treibmittels führt.

9. Verfahren nach Anspruch 8, **dadurch gekennzeichnet, daß** das erste Grundmaterial Ethylen-Vinylacetat (EVA) mit einer Schmelztemperatur zwischen 85° C und 90° C ist.

10. Verfahren nach Anspruch 8 oder 9, **dadurch gekennzeichnet, daß** das zweite Grundmaterial ein verstärktes oder unverstärktes Polypropylen mit einer Schmelztemperatur zwischen 190° C und 220° C ist.

11. Verfahren nach einem der vorangehenden Ansprüche, **dadurch gekennzeichnet, daß** das flüssige physikalische Treibmittel im wesentlichen erst dann vollständig verdampft ist, wenn das Grundmaterial in eine Werkzeugkavität eingespritzt worden ist bzw. bei einem Extruder aus der Düse ausgetreten ist.

12. Verfahren nach einem der vorangehenden Ansprüche, **dadurch gekennzeichnet, daß** die Verdampfung des flüssigen physikalischen Treibmittels durch Energiezufuhr, insbesondere Mikrowellen- oder Hochfrequenzenergie, unterstützt wird.

13. Verfahren nach einem der vorangehenden Ansprüche, **dadurch gekennzeichnet, daß** die mit dem flüssigen physikalischen Treibmittel beaufschlagten Schäben in den Schmelzstrom einer Spritzgießmaschine oder einer Extrusionsvorrichtung zudosiert werden.

## Claims

1. Method of producing foamed components, in which particulate plant carrier material containing a liquid physical driving agent is admixed to a plasticised basic material to be foamed, wherein temperature and pressure of the basic material are so set that the liquid physical drive agent does not evaporate, and subsequently the pressure of the basic material is lowered and/or the temperature of the basic material is increased so that the liquid physical drive agent at least partly evaporates and the basic material is foamed, **characterised in that** the carrier material at least partly consists of shives.

2. Method according to claim 1, **characterised in that** the liquid physical drive agent is water, alcohol or a mixture thereof.

3. Method according to claim 1 or 2, **characterised in that** the carrier material partly consists of plant fibres.

4. Method according to one of the preceding claims, **characterised in that** the plant material consists at least partly of bast fibres and/or shives of bast fibre plants and/or shives with not yet completely detached bast fibres.

5. Method according to one of the preceding claims, **characterised in that** the carrier material is at least partly pulverulent.

6. Method according to one of the preceding claims, **characterised in that** the basic material is cross-linked or non-cross-linked.

7. Method according to one of the preceding claims, **characterised in that** the basic material directly before introduction into a tool cavity or, in the case of an extruder, into the nozzle is brought to a temperature at which the liquid physical drive agent begins to evaporate.

8. Method according to one of the preceding claims, **characterised in that** the carrier material is admixed to a first plasticised basic material, wherein temperature and pressure of the first basic material are so set that the liquid physical drive agent does not evaporate, and directly before introduction into a tool cavity or, in the case of an extruder, into the nozzle region a second plasticised basic material compatible with the first basic material is admixed, the temperature of the second basic material being so high that a mixture temperature sets in which leads to an at least partial evaporation of the liquid physical drive agent.

9. Method according to claim 8, **characterised in that** the first basic material is ethylene vinylacetate (EVA) with a melt temperature between 85° C and 90° C.

10. Method according to claim 8 or 9, **characterised in that** the second basic material is a reinforced or non-reinforced polypropylene with a melt temperature between 190° C and 220° C.

11. Method according to one of the preceding claims, **characterised in that** the liquid physical drive agent is substantially completely evaporated only when the basic material has been injected into a tool cavity or, in the case of an extruder, has issued from the nozzle.

12. Method according to one of the preceding claims, **characterised in that** the evaporation of the liquid physical drive agent is assisted by the feed of energy, particularly microwave or high-frequency energy.

13. Method according to one of the preceding claims, **characterised in that** the shives loaded with the liquid physical drive agent are admetered to the melt flow of an injection-moulding machine or an extrusion device.

## Revendications

1. Procédé de production de composants moussés, dans lequel est mélangé un matériau de support végétal en forme de particules contenant un agent expansif physique liquide dans un matériau de base plastifié à mousser, la température et la pression du matériau de base étant réglées de manière à ce que l'agent expansif physique liquide ne s'évapore pas, la pression du matériau de base étant ensuite réduite et/ou la température du matériau de base augmentée de manière à ce que l'agent expansif physique liquide s'évapore du moins partiellement et que le matériau de base soit moussé,
**caractérisé en ce que**
le matériau de support comprend du moins partiellement des composants boiseux.

2. Procédé selon la revendication 1,
**caractérisé en ce que**
l'agent expansif physique liquide est de l'eau, de l'alcool ou un mélange de ceux-ci.

3. Procédé selon la revendication 1 ou 2,
**caractérisé en ce que**
le matériau de support comprend partiellement des fibres végétales.

4. Procédé selon l'une quelconque des revendications précédentes,
**caractérisé en ce que**
le matériau de base comprend du moins partiellement de fibres libériennes et/ou des composants boiseux de plantes de fibres libériennes et/ou des composants boiseux avec des fibres libériennes pas encore entièrement détachées.

5. Procédé selon l'une quelconque des revendications précédentes,
**caractérisé en ce que**
le matériau de support est du moins partiellement poudreux.

6. Procédé selon l'une quelconque des revendications précédentes,
**caractérisé en ce que**
le matériau de base est réticulé ou non.

7. Procédé selon l'une quelconque des revendications précédentes,
**caractérisé en ce que**
le matériau de base est chauffé directement avant son introduction dans une cavité d'outil, ou pour une extrudeuse dans la zone de buse, à une température à laquelle l'agent expansif physique liquide commence à s'évaporer.

8. Procédé selon l'une quelconque des revendications précédentes,
**caractérisé en ce que**
le matériau de support est mélangé dans un premier matériau de base plastifié, la température et la pression du premier matériau de base étant réglées de manière à ce que l'agent expansif physique liquide ne s'évapore pas, et immédiatement avant l'introduction dans une cavité d'outil, ou pour une extrudeuse dans la zone de buse, un deuxième matériau de base plastifié compatible avec le premier matériau de base est ajouté dont la température est suffisamment élevée pour obtenir une température de mélange qui entraîne une évaporation du moins partielle de l'agent expansif physique liquide.

9. Procédé selon la revendication 8,
**caractérisé en ce que**
le premier matériau de base est du vinylacétate d'éthylène (EVA) avec une température de fusion entre 85°C et 90°C.

10. Procédé selon la revendication 8 ou 9,
**caractérisé en ce que**
le deuxième matériau de base est un polypropylène renforcé ou non avec une température de fusion entre 190°C et 220°C.

11. Procédé selon l'une quelconque des revendications précédentes,
**caractérisé en ce que**
l'agent expansif physique liquide n'est pour l'essentiel complètement évaporé que lorsque le matériau de base a été injecté dans une cavité d'outil ou, pour une extrudeuse, sorti de la buse.

12. Procédé selon l'une quelconque des revendications précédentes,
**caractérisé en ce que**
l'évaporation de l'agent expansif physique liquide est favorisée par apport d'énergie, notamment d'énergie à micro-ondes ou à haute fréquence.

13. Procédé selon l'une quelconque des revendications précédentes,
**caractérisé en ce que**
les composants boiseux trempés dans l'agent expansif physique liquide sont dosés dans le flux de masse fondue d'une presse d'injection ou d'un dispositif d'extrusion.
